(19) Europäisches Patentamt
European Patent Office
Office européen des brevets

(11) Veröffentlichungsnummer: **0 344 601 B1**

(12) **EUROPÄISCHE PATENTSCHRIFT**

(45) Veröffentlichungstag der Patentschrift: **06.12.95**

(51) Int. Cl.[6]: **C08L 25/06**, C08L 33/14, C08L 37/00

(21) Anmeldenummer: **89109363.5**

(22) Anmeldetag: **24.05.89**

# (54) Verträgliche Polymermischungen.

(30) Priorität: **03.06.88 DE 3818837**
**22.09.88 DE 3834599**

(43) Veröffentlichungstag der Anmeldung:
**06.12.89 Patentblatt 89/49**

(45) Bekanntmachung des Hinweises auf die Patenterteilung:
**06.12.95 Patentblatt 95/49**

(84) Benannte Vertragsstaaten:
**AT BE CH DE ES FR GB IT LI NL SE**

(56) Entgegenhaltungen:

**OSAKA KOGYO GIJUTSU SHIKENSKO KIHO, Band 37, Nr. 1, 1986, Seiten 8-16, Osaka, JP; A. NAGATA et al.: "Synthesis and applications of [2-methyl-2-(oxo-alkyl)-1, 3-dioxalan-4-yl] methyl acrylates for photocrosslinking agent"**

(73) Patentinhaber: **Röhm GmbH**
**Kirschenallee**
**D-64293 Darmstadt (DE)**

(72) Erfinder: **Siol, Werner, Dr.**
**Goerdelerweg 34**
**D-6100 Darmstadt-Eberstadt (DE)**

EP 0 344 601 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung

Die Erfindung betrifft verträgliche Polymermischungen (Polymer Blends) aus einer Styrol als Monomeres enthaltenden Polymerkomponente P1 und einer einen Heterocyclus mit 5 - 8 Ringatomen und wenigstens 2 Heteroatomen im Ring enthaltenden Polymerkomponente P2 sowie Polymerkompositionen enthaltend die Polymerkomponenten P1 und P2.

Stand der Technik

In der Regel gelten unterschiedliche Polymerspecies als nicht miteinander verträglich, d.h. unterschiedliche Polymerspecies bilden bis hinab zu geringen Anteilen einer Komponente im allgemeinen keine homogene Phase aus, die durch völlige Mischbarkeit der Komponenten charakterisiert wäre.
Gewisse Ausnahmen von dieser Regel haben zunehmendes Interesse speziell bei den mit der theoretischen Deutung der Phänomene befaßten Fachleute hervorgerufen. Völlig kompatible Mischungen von Polymeren zeigen völlige Löslichkeit (Mischbarkeit) in allen Mischungsverhältnissen.

Eine zusammenfassende Darstellung über mischbare Polymersysteme findet sich z.B. bei D.R. Paul et al. in Polymer and Engineering Science 18, (16) 1225 - 34 (1978); J. Macromol. Sci.-Rev. Macromol. Chem. C. 18 (1) 109 - 168 (1980).

Zum Nachweis der Mischbarkeit wurde häufig die Glastemperatur Tg oder die sogenannte "Optische Methode" (Klarheit eines aus homogener Lösung des Polymergemischs gegossenen Films) herangezogen. (Vgl. Brandrup-Immergut, Polymer Handbook, Ed., III-211-2113). Als ein weiterer Test auf die Mischbarkeit von unter sich verschiedenen Polymeren wird das Auftreten der unteren kritischen Lösungstemperatur (Lower Critical Solution Temperature = LCST) benutzt. (Vgl. DE-A 34 36 476.5 und DE-A 34 36 477.3) Das Auftreten der LCST beruht auf dem Vorgang, daß sich beim Erwärmen die bis anhin klare, homogene Polymermischung in Phasen auftrennt und optisch trübe bis opak wird. Dieses Verhalten stellt nach der Literatur einen eindeutigen Beweis dafür dar, daß die ursprüngliche Polymermischung aus einer einzigen, im Gleichgewicht befindlichen homogenen Phase bestanden hatte.
Beispiele für vorhandene Mischbarkeit stellen z.B. die Systeme Polyvinylidenfluorid mit Polymethylmethacrylat (PMMA) oder mit Polyethylmethacrylat dar. (US-PS 3 253 060 US-PS 3 458 391, US-PS 3 459 843). Neuere Ergebnisse über "Polymer Blends" und mögliche Anwendung derselben werden von L.M. Robeson in Polym. Engineering & Science 24 (8) 587 - 597 (1984) berichtet.
Copolymere aus Styrol und Maleinsäureanhydrid, sowie aus Styrol und Acrylnitril sind unter gewissen Voraussetzungen mit Polymethylmethacrylat (PMMA) verträglich (DE-A 20 24 940). Hervorgehoben wurden die verbesserten Gebrauchseigenschaften von Formmassen dieser Typen. Ebenso sind Copolymere aus Styrol und zur Wasserstoffbrückenbindung befähigte Hydroxylgruppen Monomeren bei bestimmter Zusammensetzung mit Polymethacrylaten verträglich, so z.B. Copolymere aus Styrol und p-(2-Hydroxylhexafluoroisopropyl)styrol [B.Y. Min and Eli M. Pearce, Organic Coatings and Plastics Chemistry, 45, (1981) 58 - 64, oder Copolymere aus Styrol und Allylalkohol (F. Cangelosi and M.T. Shaw, Polymer Preprints (Am. Chem. Soc., Div. Polym. Chem.) 24, (1983), 258 - 259]. Verträglichkeit wurde auch im System Acrylnitril-Styrol-Copolymer abgemischt mit Poly(tetrahydrofurfurylmethacrylat) gefunden (Goh, S.H.; Siow, K.S., J. Appl. Polym. Sci, 1987, 33(5) 1949). Ebenso ist Polytetrahydrofurfurylmethacrylat mit Copolymeren aus Styrol und Allylalkohol verträglich (Goh, S.H., Polym. Bull. (1987), 17(3), 221-4).
Verträglichkeit wird auch für Acrylnitril-Styrol-Copolymere, bzw. Acrylnitril-α-methylstyrol-Copolymere mit Polymethylmethacrylaten gefunden, die sterisch gehinderte Aminogruppen enthalten. So ist ein Methylmethacrylat-3,2,6,6-Tetramethylpiperidinylmethacrylat-Copolymeres mit diesen Styrol-Acrylnitril bzw. α-Methylstyrol-Acrylnitrilcopolymeren verträglich. (Goh et al. J. Appl. Polym. Sci, 1986, 31, 2055).
Verträglichkeit wird auch für Mischungen aus Poly-p-Vinylphenol und Polymethacrylaten gefunden. So ist Poly-p-Vinylphenol beispielsweise mit Polymethylmethacrylat, Polyethylmethacrylat, Polypropylmethacrylat oder Polytetrahydrofurfurylmethacrylat verträglich. (Goh, S.H.; Siow, K.S., Polym. Bull. 1987, 17(5), 453-8.)

Polystyrol selbst sowie andere Styrol enthaltende Polymere gelten hingegen als mit Polymethylmethacrylat unverträglich. So wird von Shaw, M.T. and Somani, R.H. eine Mischbarkeit von nur 3,4 ppm (PMMA mit einem Molekulargewicht von 160 000) bzw. von 7,5 ppm (PMMA mit einem Molekulargewicht von 75 000) mit Polystyrol angegeben [Adv. Chem. Ser. 1984, 206 (Polym. Blends Compos. Multiphase Syst.), 33 - 42] (CA 101 : 73417 e).
Sogar sehr niedermolekulares Polystyrol ist mit PMMA wenig verträglich. So ergibt bereits eine Mischung aus 20 % eines extrem niedermolekularen Styrol-Oligomeren (MW : 3 100) kein klares Produkt mehr. Bei

einem ebenfalls noch sehr niedrigen Molekulargewicht von 9 600 ist sogar eine nur 5 %-ige Lösung von Polystyrol in PMMA nur noch translucent. (Raymond R. Parent and Edward V. Tompson, Journal of Polymer Science: Polymer Physics Edition, Vol. 16, 1829 bis 1847 (1978)).
Ebensowenig sind andere Polymethacrylate und Polyacrylate mit Polystyrol zu transparenten Kunststoffen abmischbar. Dies gilt z.B. für Polyethylmethacrylat, Polybutylmethacrylat, Polyisobutylmethacrylat, Polyneopentylmethacrylat, Polyhexylmethacrylat und viele andere. Vgl. auch R.H. Somani and M.T. Shaw, Macromolekules 14, 1549 - 1554 (1981). Demgegenüber sind Mischungen aus Polystyrol und Polycyclohexylacrylat und Mischungen aus Polystyrol und Polycyclohexylmethacrylat völlig verträglich. (Siehe P 36 32 369.1 vom 24.09.1986). Die Verträglichkeit ist dabei so gut, daß beim Erwärmen eine LCST nicht auftritt, d.h. die Verträglichkeit ist über den gesamten Zugänglichen Temperaturbereich gegeben. Diese gute Polystyrolverträglichkeit ist für stark substituierte Cyclohexylderivate nicht mehr gegeben. So wird weder für Poly-3,5,5,-Trimethylcyclohexylacrylat noch für Poly-3,3,5-Trimethylcyclohexylmethacrylat noch für Polyisobornylmethacrylat Verträglichkeit mit Polystyrol gefunden.
Demgegenüber ist die Verträglichkeit des Poly- -Methylstyrols mit Polymethacrylaten durchweg besser (siehe auch P 36 32 370.5). Mechanische Abmischungen von Polymeren (Polyblends) haben in bestimmten Fällen und auf bestimmten Gebieten der Kunststoffindustrie zu eigenschaftsmäßig verbesserten Kunststoffprodukten geführt (vgl. Kirk-Othmer, 3rd. Ed., Vol 18, pp. 443 - 478, J. Wiley 1982). Die physikalischen Eigenschaften solcher "Polyblends" stellen gewöhnlich einen Kompromiß dar, der unter dem Strich eine Verbesserung gegenüber den Eigenschaften der individuellen Polymeren bedeuten kann. Dabei haben **multiphasische** Polymermischungen eine ungleich größere kommerzielle Bedeutung erlangt als verträgliche Mischungen (vgl. Kirk-Othmer loc.cit., pg. 449).
Es war schon seit längerem bekannt Polymerisate von (Meth)acrylsäureestern des 2,2-Dimethyloxymethyldioxolans durch (säurekatalysierte) Ringöffnungsreaktion zu vernetzen. Einen besonderen Aspekt der Vernetzung, nämlich den der Photovernetzung greift die Literaturstelle A. Nagata et al. in "Osaka Kogyo Gijutsu Shikensko Koho, Bd. 37, Nr.1, Seiten 8 - 16, Osaka, JP, 1986 auf. Die darin beschriebenen Monomeren weisen gemeinsam den 1,3-Dioxolan-Ring auf, dessen Vernetzungswirkung auf der Ringspaltung unter Photoneneinwirkung beruht. Es wird u.a. der Frage nachgegangen, ob unter Vernetzungsbedingungen auch Vernetzungsreaktionen mit Fremdketten wie Polymethylmethacrylat oder Polystyrol auftreten. Der Gehalt an den vernetzungsfähigen Monomeren orientiert sich dabei an den für eine Vernetzung notwendigen Werten, ist also relativ gering. Das Problem der Polymer-Kompatibilität bleibt in dieser Arbeit völlig außer Betracht.

Aufgabe und Lösung

Multiphasische und verträgliche Polymermischungen sind somit sowohl hinsichtlich ihrer physikalischen als auch ihrer anwendungstechnischen relevanten, insbesondere ihrer optischen Eigenschaften (Transparenz, Klarheit usw.) streng auseinanderzuhalten. Wie bereits ausgeführt, setzt öfters mangelnde Verträglichkeit dem Abmischen von Kunststoffen mit dem Ziel, dadurch ein verbessertes Gesamt-Eigenschaftsspektrum zu erreichen, enge Grenzen.
Es wurde nun gefunden, daß überraschenderweise Mischungen aus Polystyrol und einer einen Heterocyclus mit 5 - 8 Ringatomen und wenigstens 2 Heteroatomen im Ring enthaltende Polymerkomponente verträglich sind.

Die vorliegende Erfindung betrifft verträgliche Polymermischungen PM aus zwei verschiedenen Polymerkomponenten

A) 0,1 bis 99,9, vorzugsweise 10 bis 99 Gew.-%, insbesondere 50 bis 90 Gew.-% eines Polystyrols das zu wenigstens 20 und bis zu 100 Gew.-% aus Styrol und 80 bis 0 Gew.-% aus weiteren mit Styrol copolymerisierbaren Monomeren aufgebaut ist, ( = Polymer P1) und

B) 99,9 bis 0,1 vorzugsweise 1 bis 90 Gew.-%, insbesondere 10 bis 50 Gew.-% eines Polymeren das zu mindestens 20 und bis zu 100 Gew.-% aus den Monomeren der Formel I

$$CH_2 = \underset{\displaystyle R_1}{\underset{|}{C}} - \underset{\displaystyle O}{\underset{\|}{C}} - O - R_2 \qquad I$$

worin $R_1$ für Wasserstoff, Methyl oder eine Gruppe

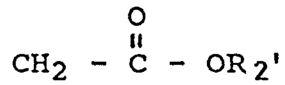

steht und worin $R_2$ bzw. $R_2$'für eine Gruppe

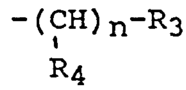

steht, mit der Maßgabe, daß n für 0,1,2,3, $R_3$ für einen gegebenenfalls substituierten Heterocyclus mit 5 - 8 Ringatomen und wenigstens 2 Heteroatomen im Ring, von denen wenigstens 1 Heteroatom Sauerstoff ist, und $R_4$ für Wasserstoff oder einen Alkylrest mit 1 - 6 Kohlenstoffatomen steht und für n = 2 oder 3 die einzelnen Reste $R_4$ unter sich gleich oder verschieden sein können und zu 80 bis 0 Gew.-%, vorzugsweise 80 bis 2 Gew.-% an weiteren mit den Monomeren der Formel I copolymerisierbaren Monomeren aufgebaut ist (=Polymer P2).

Soweit die Heteroatome im Heterocyclus nicht Sauerstoffatome darstellen, sind sie vorzugsweise ausgewählt aus der Gruppe, bestehend aus Stickstoff, Schwefel und weniger bevorzugt Phosphor. Im allgemeinen übersteigt die Zahl der Heteroatome im Ring nicht die Zahl 4, speziell nicht die Zahl 3. Bevorzugt sind ferner 5 und 6-gliedrige Heterocyclen, wobei vorzugsweise wenigstens ein Ringglied eine $-CH_2$-Gruppe darstellt.

Unter den Substituenten seien insbesondere Alkylsubstituenten mit 1 bis 6 Kohlenstoffatomen verstanden.

Wie aus dem weiteren hervorgeht sind Polymer P1 und Polymer P 2 stets vom Typ her gemäß ihren bestimmenden Komponenten eindeutig voneinander verschieden, so daß nach den Erfahrungen des Standes der Technik Kompatibilität nicht zu erwarten war. Vorzugsweise macht die Summe der Polymerkomponenten A) plus B) einhundert Prozent der gesamten Polymeren in der Mischung PM aus, wobei die Polymermischung PM jedoch im weiteren unter Umständen anstelle eines einheitlichen Polymeren eingesetzt, d.h. in Kombination mit weiteren Polymeren verarbeitet werden kann.

Die Verträglichkeit der erfindungsgemäß herzustellenden Abmischungen aus dem Polystyrol gemäß A) und dem Poly (meth)acrylat gemäß B) kommt umso überraschender, als Polystyrole mit anderen Polymethacrylaten und Polyacrylaten als Polycyclohexylmethacrylat und Polycyclohexylacrylat in der Regel keine verträglichen Mischungen bilden.

Nach vorliegenden Befunden ist die Verträglichkeit der aus P1) und P2) gebildeten Mischungen sogar so gut, daß bei einer Temperatur von 200 Grad C und darüber keine Entmischung eintritt. Bevorzugt sind dabei Polymere P2, die zu mindestens 20 Gew.-% und bis zu 100 Gew.-% aus Monomeren der Formel I aufgebaut sind. VorZugsweise enthält der heterocyclische Rest $R_3$ keine Doppelbindungen im Ring. Die Monomeren der Formel I weisen also keinen aromatischen Rest $R_3$ auf. Besonders erwähnt seien die Polymermischungen aus Polystyrol als Polymerkomponente P1) und solchen Polymeren P2), in denen die Monomeren der Formel I einen Heterocyclus $R_3$ aufweisen, der 2 Sauerstoffatome im Ring besitzt. Besonders bevorzugt sind dabei solche Heterocyclen $R_3$, in denen die beiden Sauerstoffatome nur durch ein Kohlenstoffatom voneinander getrennt sind, also Heterocyclen, die ein Acetal oder ein Ketal darstellen. Dabei sind Heterocyclen mit 5 Ringatomen bevorzugt, wobei Heterocyclen vom Typ 1,3-Dioxolan besonders bevorzugt sind.

In einer ganz besonders bevorzugten Ausführungsform sind 20 - 100 Gew.-% des Polymeren P2 aus Monomeren der Formel I'aufgebaut.

I'

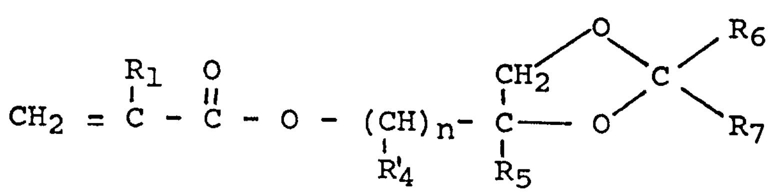

Darin stehen $R_4$', $R_5$, $R_6$, $R_7$ unabhängig voneinander für Wasserstoff oder einen Alkylrest mit 1 - 6 Kohlenstoffatomen.

In einer bevorzugten Ausführungsform stehen $R_6$ und $R_7$ jeweils für einen Alkylrest mit 1 - 6 Kohlenstoffatomen, wobei ganz besonders bevorzugt gilt: $R_6$ = $R_7$ = Methyl. Bevorzugt ist ferner, daß $R_4$ für Wasserstoff und n für 1 stehen. In der besonders bevorzugten Ausführungsform steht auch $R_5$ für Wasserstoff. Damit besteht in der besonders bevorzugten Ausführungsform Polymer P2 zu 20 - 100 Gew.-% aus Monomeren der Formel I''.

I''

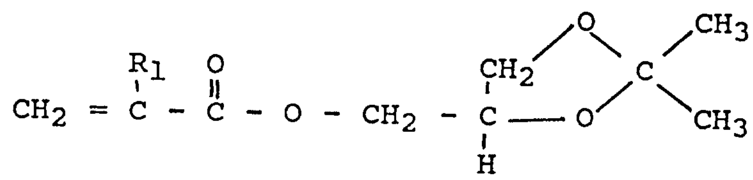

$R_1$ = H, $CH_3$

Die ausgezeichnete Verträglichkeit dieser Polymermischung PMI läßt eine weitgehende Variationsbreite zu sowohl hinsichtlich des Mischungsverhältnisses als auch der Mischungspartner. Dies gilt insbesondere für reines Polystyrol als Polymer P1. So ist es einerseits möglich, die Polymerkomponente P2 durch Copolymerisation mit geeigneten Monomeren weitgehend zu variieren. Andererseits läßt sich auch die Polymerkomponente P1 im gewissen Rahmen durch Copolymerisation mit geeigneten Monomeren verändern, ohne daß die Verträglichkeit verloren geht. Passende Comonomere finden sich z.B. im Kunststoff-Handbuch, Herausgeber R. Vieweg u. G. Daumiller, Band V, Carl Hanser Verlag 1969, S. 104 - 108. Geeignete Comonomere für die Komponente P2 sind Acryl- bzw. Methacrylsäureester, im allgemeinen solche von Alkoholen mit 1 - 18 Kohlenstoffatomen, insbesondere Alkanolen. Alkohole mit 1 - 12 Kohlenwasserstoffen sind dabei bevorzugt, der Anteil an Cyclohexylalkohol ist in einer bevorzugten Ausführungsform auf < 9,9 Gew.-% beschränkt, d.h. in dieser bevorzugten Ausführungsform ist der Anteil von Cyclohexyl(meth)acrylat am Polymeren P2 < 9,9 Gew.-%, vorzugsweise < 1 Gew.-%. Von Interesse sind auch Monomere mit UV-absorbierenden Gruppen im Molekül, beispielsweise den in der US-A 4 576 870 genannten bzw. beschriebenen.

Des weiteren kommen andere mit dem Monomeren I copolymerisierbare Monomere als Comonomere in Frage. Besonders genannt sei das Methylmethacrylat als Comonomeres. Der Anteil des Monomeren I am Gehalt der Polymerkomponente P2 liegt in der Regel im Bereich 100 - 20 Gew.-%, besonders bevorzugt im Bereich von 100 - 30 Gew.-% und ganz besonders bevorzugt im Bereich von 80 - 40 Gew.-%. Styrol im Polymerisat P1 kann zu einigen Gew.-%, z.B. 10 Gew.-% durch p-Methylstyrol substituiert werden. Darüber hinaus ist im gewissen Umfang ein Austausch des Styrols durch andere alkylsubstituierte, insbesondere $C_1$ -$C_4$-alkylsubstituierte Styrole wie beispielsweise m-Methylstyrol, p-tert. Butyl-Styrol, $\alpha$-Methylstyrol möglich. In der Regel ist der Anteil an diesen Monomeren kleiner als 20 Gew.-%. Ebenso kann das Styrol durch Ester der Acrylsäure und der Methacrylsäure teilweise ersetzt werden, vor allem durch Ester von $C_1$ - $C_{18}$-Alkoholen, vorzugsweise von $C_1$ - $C_8$-Alkanolen. Ferner kann das Styrol in untergeordneter Menge durch andere Vinylverbindungen, insbesondere Vinylester ersetzt werden, wie z.B. Vinylacetat und Vinylpropionat.

Dabei ist darauf zu achten, daß der Styrolgehalt an der Polymerkomponente P1 wenigstens 20 Gew.-%, bevorzugt jedoch wenigstens 50 Gew.-%, besonders bevorzugt wenigstens 90 Gew.-% und ganz besonders bevorzugt wenigstens 99 Gew.-% ausmacht.

Während die Polymerkomponente P1 in der bevorzugtesten Ausführungsform reines Polystyrol darstellt, mit anderen hydrophoben Vinylverbindungen jedoch weitgehend modifiziert werden kann, ist der Anteil an sehr polaren Monomeren, wie z.B. Acrylnitril, Maleinsäureanhydrid, Maleinsäureimiden, p-(2-Hydroxylhexafluoroisopropyl)styrol oder Allylalkohol am Polymeren P1 sehr begrenzt. Der Anteil dieser polaren Monomeren sollte von 0 bis unter 10 Gew.-%, bzw. unter 5 Gew.-% an der Polystyrolkomponente P1 betragen. Besonders bevorzugt sind solche Polymere P1, die weniger als 0,1 Gew.-% dieser polaren Monomeren enthalten, vorzugsweise 0 Gew.-%.

Gleichermaßen kann im Polymerisat P2 das Monomere I durch Comonomere anteilig ersetzt werden.

Die Variationen werden sich dabei in aller Regel nach den Erfordernissen des jeweiligen Einsatzgebietes richten. So wird der Monomer-I-Gehalt eines Polymeren P2, das in hohen Gewichtsanteilen beispielsweise zur Modifizierung des Brechungsindex im reinen Polystyrol eingesetzt werden soll, höher sein, in der Regel deutlich größer als 20 Gew.-% oder bevorzugt deutlich größer als 30 Gew.-%, als der Monomeranteil I eines Polymeren P2, das mit Polymeren P1 beispielsweise nur bei Raumtemperatur verträglich sein soll, bei erhöhter Temperatur jedoch wieder Phasentrennung (also Unverträglichkeit) aufweisen soll.

In der Regel ist eine Verträglichkeit der Polymen P1 mit den Polymeren P2 auch dann noch gegeben, wenn auch das Polymere P1 kleinere Anteile des Monomeren I und/oder das Polymere P2 auch Styrol enthält.

Dabei ist der Styrolgehalt des Polymeren P1) jedoch deutlich höher als der Styrolgehalt des Polymeren P2). In der Regel ist die Differenz des Styrolgehalts (Gew.-% Styrol in Polymer P1 minus Gew.-% Styrol im Polymer P2 größer als 10 Gew.-%, bevorzugt größer als 30 Gew.-%, besonders bevorzugt größer als 50 Gew.-% und ganz besonders bevorzugt größer als 90 Gew.-%.
Ebenso ist der Monomer-I-Gehalt des Polymeren P2 deutlich höher als der Monomer-I-Gehalt des Polymeren P1. So enthält Polymer P1 in der Regel weniger als 5 Gew.-% Monomer der Formel I, bevorzugt weniger als 0,1 Gew.-%. In einer bevorzugten Ausführungsform ist P1 reines Polystyrol.

Die **Charakterisierung** der erfindungsgemäßen Polymermischungen PM als **verträgliche** Mischungen erfolgt nach den anerkannten Kriterien (Vgl. Kirk-Othmer, loc.cit, Vol 18, pp 457 - 460; J. Brandrup, E.H. Immergut, Polymer Handbook, 2. Ed. J. Wiley 1975, pg. III-211)

a) Bei Anwendung optischer Verfahren beobachtet man bei den erfindungsgemäßen Polymermischungen PM einen **einzigen Brechungsindex,** der zwischen denen der beiden Polymerkomponenten P1 und P2 liegt.

b) Die Polymermischungen PM besitzen eine einzige Glasübergangstemperatur Tg (die zwischen der der Polymerkomponenten liegt)

Herstellung der Polymerisate P1 und P2

Die Herstellung der Polymerisate P1 und P2 kann nach den bekannten Regeln der Polymerisation und nach bekannten Verfahren erfolgen. Die Polymeren vom Typ P1 können z.B. nach Houben-Weyl, Methoden der Organischen Chemie, 4. Auflage, Bd. XIV/1, pp 761 - 841, Georg Thieme-Verlag (1961) hergestellt werden. Sie sind auch in geeigneter Form im Handel erhältlich. Dabei kann vorzugsweise das radikalische, aber auch ionische Polymerisationsverfahren zu Anwendung kommen. Die Molgewichte M der erfindungsgemäß eingesetzten Polymeren P1 liegen in der Regel oberhalb von 3 000, bevorzugt im Bereich von 5 000 - 1000 000, besonders bevorzugt im Bereich 20 000 - 500 000. (Bestimmung durch Lichtstreuung; vgl Kirk-Othmer, 3rd. Ed. Vol. 18 loc.cit. pg 211) Es sei indessen betont, daß die Molgewichte die Eignung als Komponente in den verträglichen Polymermischungen PM nicht kritisch zu beeinflussen scheinen. Dies gilt sowohl für die Homo- als auch die Copolymerisate der Typen P1 und P2. Für eine Verträglichkeit von Polymer P1 und Polymer P2 ist die Taktizität der Polymeren von gewisser Bedeutung. In der Regel ist insbesondere ein Polymeres P2 mit einem geringen Anteil an isotaktischen Triaden (wie es beispielsweise durch radikalische Polymerisation erhalten wird) gegenüber Polymeren mit einem hohen isotaktischen Anteil, wie es durch spezielle ionische Polymerisation erzeugt wird, bevorzugt.

Die Herstellung der Homo- bzw. Copolymerisate P2 erfolgt nach bekannten Verfahren. (Vgl. H. Rauch-Puntigam, Th. Völker Acryl- und Methacrylverbindungen, Springerverlag 1967). Wenn auch prinzipiell eine Herstellung durch anionische Polymerisation oder Group-Transfer-Polymerisation (siehe auch O.W. Webster et al., J. Am. Chem. Soc., 105, 5706 (1983)) möglich ist, so ist doch die bevorzugte Herstellungsform die radikalische Polymerisation.

Die Molgewichte M der Polymerisate P2 liegen in der Regel oberhalb von 3 000 im allgemeinen im Bereich von 10 000 bis 1000 000, vorzugsweise 20 000 bis 300 000 (Lichtstreuung). Bei der Auswahl der Monomerkomponenten, die als Comonomere bei P2 eingesetzt werden sollen, ist darauf zu achten, daß die Glastemperatur Tg des resultierenden Polymerisats die technische Anwendbarkeit des Gesamtsystems PM nicht einschränkend beeinflußt. So soll für die Herstellung von Formkörpern aus der Polymermischung PM wenigstens eines der Polymern P1 und P2 eine Glastemperatur Tg > 70 Grad C aufweisen, bevorzugt ist für diese Anwendung, daß auch die Polymermischung PM eine Glastemperatur Tg > 70 Grad C aufweist. Diese Einschränkung gilt bevorzugt für die Herstellung von spritzgegossenen, gepressten bzw. extrudierten Gegenständen aus der Polymermischung PM. Für andere Anwendungsgebiete, beispielsweise für Lacke, für Elastomere oder für eine reversible thermotrope Verglasung (Polymermischung mit Trübungspunkt beim Erwärmen) also für eine Anwendung gemäß DE-A 34 36 477.3, sind jedoch solche Polymermischungen PM bevorzugt, die eine Polymerkomponente P2 mit einer Glastemperatur Tg < 40 Grad C oder bevorzugt < 20 Grad C aufweisen.

Herstellung der Mischungen PM

Die verträgliche Mischungen PM können durch die unterschiedlichen Verfahren hergestellt werden, sie werden z.B. durch intensives mechanisches Vermischen der Komponenten P1 und P2 in der Schmelze, im Extruder usw. erzeugt; oder sie können auch aus einem gemeinsamen Lösungsmittel heraus als sogenannte "solution cast polyblends" hergestellt werden. (Vgl. Kirk-Othmer "Encyclopedia of Chemical Technology" 3rd. Ed. Vol. 18, pg. 443 - 478, J. Wiley, 1982). Auch kann so vorgegangen werden, daß Polymer P1 in der

Monomermischung des anderen Polymeren P2 aufgelöst wird und anschließend Polymer P2 in Gegenwart von Polymer P1 erzeugt wird. Umgekehrt kann natürlich auch Polymer P1 in Gegenwart des Polymeren P2 erzeugt werden. Ebenso kann die Polymermischung PM aus gemeinsamen Fällungsmitteln erzeugt werden. Der Mischungsart sind keine Grenzen gesetzt. Man erzeugt in der Regel zunächst Mischungen der Komponenten P1 und P2 wobei vorteilhaft von Feststoffen in Form beispielsweise eines Perlpolymerisats oder eines Granulats ausgegangen wird unter Verwendung langsam laufender Mischaggregate wie z.B. Trommel-, Rhönrad- oder Doppelkammer-Pflugscharmischern. Die langsam laufenden Mischaggregate verursachen ein mechanisches Mischen, ohne daß die Phasengrenzen aufgehoben werden. (Vgl. Ullmanns Encyklopädie der Technischen Chemie, 4. Auflage, Bd. 2, pg. 282 - 311, Verlag Chemie). Anschließend erfolgt die thermoplastische Aufbereitung durch homogenes Mischen in der Schmelze unter Verwendung von heizbaren Mischaggregaten bei den dafür geeigneten Temperaturen z.B. 150 bis ca. 300 Grad C in Knetern oder vorzugsweise Extrudern, z.B. Ein- oder Mehrschneckenextrudern oder gegebenenfalls in Extrudern mit oszillierender Schnecke und Scherstiften (z.B. im BUSSCO-Kneter).
Man kann nach diesen Verfahren Gleichkorngranulate (z.B. Heißabschlag, Würfelform, Rundkorn) herstellen. Die Korngröße der Granulate liegt dabei im Bereich 2 bis 5 mm. Eine weitere, einfache Methode zur Erzeugung der Polymermischungen PM ist das Abmischen von Polymerdispersionen (enthaltend Polymerkomponente P1 und Polymerdispersionen, enthaltend die Polymerkomponente P2). Diese Dispersionsmischungen können gemeinsam koaguliert werden, gemeinsam sprühgetrocknet werden oder gemeinsam auf einem Extruder abgequetscht werden. Andererseits können die Dispersionsmischungen auch gemeinsam zu einem Film aufgetrocknet werden.

Vorteilhafte Wirkungen der Mischungen PM

Die erfindungsgemäßen verträglichen Polymermischungen PM weisen insbesondere die nachfolgenden Vorteile auf, die die entsprechenden technischen Einsatzmöglichkeiten nahelegen wobei "Polystyrol" stellvertretend für die unter die Polymeren P1 fallenden Möglichkeiten aufgeführt sei.

1) Zunächst sind die Polymermischungen (Polystyrol/Polymer P2)- im Unterschied zu Mischungen aus den meisten anderen Poly(meth)acrylaten und Polystyrolen - verträglich. D.h. die erfindungsgemäßen Polymermischungen sind im nicht pigmentierten Zustand im Unterschied zu nicht verträglichen Polystyrol/Poly(meth)acrylatabmischungen glasklar (sie zeigen keine Lichtstreuung, d.h. in der Regel ist der "Haze" < 10 %). Erfindungsgemäß sind aber auch solche Mischungen, die nur bei Raumtemperatur verträglich sind, bei Temperaturerhöhung jedoch Entmischung zeigen.

2) Mischungen aus Polystyrolen und Polymer P2 zeigen wie Polystyrole und Polymer P2 selbst eine geringe Wasseraufnahme.

3) Durch Abmischen mit Polymer P2 läßt sich die Doppelbrechung des Polystyrols reduzieren. Die beiden vorgenannten Eigenschaften qualifizieren die erfindungsgemäßen Polymermischungen PM speziell als Datenspeichermaterial, insbesondere für optisch ablesbare Informationsträger. [Vgl. J. Hennig, Kunststoffe 75, pg 425 (1985)]

4) Durch Abmischen mit Polymer P2 kann der Brechungsindex des Polystyrols reduziert werden. Beispielsweise kann Polystyrol durch Abmischen mit Polymer P2 im Brechungsindex so verändert werden, daß der Brechungsindex der Polystyrol/Polymer P2-Mischung dem Brechungsindex einer eingelagerten Gummiphase angepasst wird. Auf diesem Weg kann man transparente, schlagzähe Kunststoffe erhalten.

Besonderes Interesse finden auch Polymerkompositionen, die zu ca. 40 - 99 Gew.-%, bevorzugt 70 - 95 Gew.-% aus der Polymermischung PM und zu 60 - 1 Gew.-%, bevorzugt 30 - 5 Gew.-% aus einem weiteren von P1 und P2 chemisch unterscheidbaren Polymeren P3 besteht, wobei gilt, daß Polymer P3 mit Polymer P1, P2 und mit der Mischung PM unverträglich ist.
In der Regel wird dabei die Zusammensetzung der Polymermischung PM so gewählt, daß der Brechungsindex des Polymeren P3 mit dem Brechungsindex der Mischung PM übereinstimmt. In der Regel soll also bei Raumtemperatur gelten:

$$n_{D\,PM}^{25} - n_{D\,P3}^{25} < 0{,}01$$

Im allgemeinen wird das mit PM unverträgliche Polymere P3 eine Tg < 20 Grad C aufweisen und wenigstens teilweise mit wenigstens einem der Bestandteile der Polymermischung PM, also mit P1 oder P2, kovalent verknüpft sein. Darüber hinaus kann das Polymere P3 vernetzt sein.
Ganz besonders bevorzugt ist der Fall, daß das Polymere P3 Polybutadien oder Polyisopren ist.

Polymerkompositionen, aufgebaut aus 40 - 99 Gew.-% PM und 1 - 60 Gew.-% P3 zeichnen sich, insbesondere wenn P3 eine Tg < 20 Grad C aufweist, durch eine im Vergleich zu reinem PM verbesserte Schlagzähigkeit aus.

Insbesondere gestatten Polymerkompositionen aus 40 - 99 Gew.-% PM und 60 - 1 Gew.-% P3 eine einfache Schlagzähabmischung von Polymeren P2. So kann gegebenenfalls sprödes P2 durch Abmischen mit handelsüblichen, schlagzäh ausgerüstetem P1 (z.B. Styrol-Butadien-Blockcopolymere) zu einer hoch schlagzähen, klaren PM/P3-Polymerkomposition abgemischt werden.

5) Weiter können Verklebungen von Polystyrolen mit dem Polymer P2 oder vorteilhaft mit Monomer I enthaltenden Monomeren/Initiator-Mischungen durchgeführt werden. Hier kann die hohe Polymerisationsgeschwindigkeit der Acrylate mit der guten Polymerverträglichkeit kombiniert werden. Derartige Objekte sind zu betrachten als erfindungsgemäß erfaßte Festkörper mit einer Polymerkonfiguration, aufgebaut aus einer Schicht aus Polymer P1, einer zweiten Schicht aus Polymer P2 und einer Zwischenschicht aus einer verträglichen Polymermischung PM bestehend aus

P1) 0,1 bis 99,9 Gew.-% eines Polystyrols, das zu 20 bis 100 Gew.-% aus Styrol und zu 80 bis 0 Gew.-% aus mit Styrol copolymerisierbaren Monomeren, und

P2) 99,9 bis 0,1 Gew.-% eines Polymeren P2 das zu 20 bis 100 Gew.-% aus Monomeren der Formel I und zu 80 bis 0 Gew.-% aus mit Monomeren der Formel I copolymerisierbaren Monomeren aufgebaut ist.

Ähnlich sind Objekte aus Abfallmaterial oder mit einem Gehalt an Abfallmaterial zu betrachten, etwa wenn Abfallmaterial PM in ein Polymer P1 eingebaut wird. Sie gehorchen der Definition, derzufolge eine verträgliche Polymermischung PM als Schicht abgedeckt wird von einer Deckschicht aus dem zweiten Polymer.

In all den vorgenannten Objekten soll die Deckschicht vorzugsweise 0,1 bis 20 Gew.-% (bezogen auf die Deckschicht) mindestens eines UV-Absorbers in zweckmäßiger Verteilung enthalten. Brauchbare UV-Absorber werden z.B. in Kirk-Othmer, Encyclopedia of Chemical Technologie, 3rd Ed. Vol. 23, pp. 615-627, J.Wiley 1983; R. Gächter u. H. Müller, Taschenbuch der Kunststoff-Additive, Carl Hanser Verlag 1979, S. 90 bis 143; Ullmann's Encyclopädie der Techn. Chemie, 4. Auflage, Band 15, S. 256 - 260, Verlag Chemie 1978, US-A 4 576 870, angegeben.

6) Verarbeitungstechnische Vorteile resultieren bei der Anwendung von Mischungen PM aus > 90 Gew.-% Polystyrol und < 10 Gew.-% Polymere P2. In diesem Falle übernimmt das Polymere P2 die Funktion eines Verarbeitungshilfsmittels.

7) Aus Polystyrol/Polymer P2-Abmischungen lassen sich transparente Formkörper gewinnen, die an der Oberfläche durch Energieeinwirkung, z.B. geeignete Strahlung so modifiziert worden sind, daß das Polymer P2 abgebaut worden ist, das Polystyrol jedoch nicht. (Formkörper mit reflexmindernder Oberfläche, Resists)

Die folgenden Beispiele dienen zur Erläuterung der Erfindung.

Die Bestimmung der VICAT-Erweichungstemperatur erfolgt nach DIN 53460.

Die Bestimmung der reduz. Viskosität ($\eta spec/_c$) in Anlehnung an DIN 1342, DIN 51562 und DIN 7745. Die Bestimmung der Lichtdurchlässigkeit kann- sofern nicht anders vermerkt- nach DIN 5036 vorgenommen werden. Die Trübung (haze) wird in % (ASTM D 1003) angegeben.

BEISPIELE

Beispiel 1:

Verträgliche Mischungen aus Poly-(2,2-Dimethyl-1,3-dioxolan-4-ylmethylmethacrylat) und Polystyrol.
$R_2$ = 2,2-Dimethyl-1,3-dioxolan-4-ylmethyl

I-1 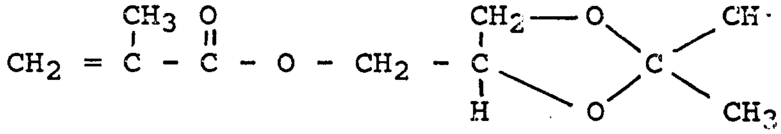

Aus Poly-(2,2-Dimethyl-1,3-dioxolan-4-ylmethylmethacrylat) = P1, hergestellt durch radikalische Polymerisation, und Polystyrol = P2 werden Filme im Verhältnis 80/20, 50/50, 20/80 hergestellt. Alle Filme sind glasklar und verträglich. Eine Entmischung findet auch beim Erwärmen bis 260 Grad C nicht statt.

Beispiel 2:

Polymer P2 besteht zu 100 Gew.-% aus Monomeren der Formel I - 2.

I-2

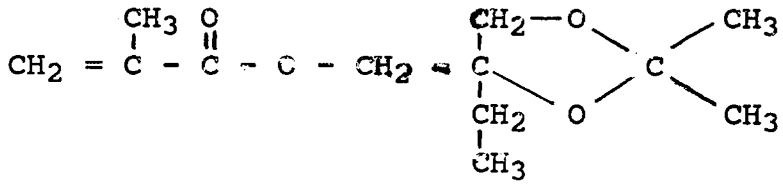

Auch hier sind Abmischungen mit Polystyrol im Verhältnis 20/80, 50/50, 80/20 glasklar verträglich. Die Herstellung der Filme erfolgt jeweils durch Lösen der Polymeren zu 20 Gew.-%igen Lösungen in Toluol und Auftrocknen der Lösungen.

Beispiel 3

Herstellung der Polymeren

20 g 2,2-Dimethyl-1,3-dioxolan-4-ylmethylmethacrylat werden mit 0,03 g t-Butylperneodecanoat und 0,06 g Dodecylmercaptan versetzt und in einem Glasgefäß unter Inertgas (Argon) 2 Stunden bei 60 Grad C polymerisiert. Danach wird abgekühlt, mit Aceton verdünnt und in Methanol gefällt.
Nach Trocknung im Vacuum resultiert ein Polymeres mit J = 57 ml/g.
Dieses Polymere wird einerseits zur Untersuchung der Verträglichkeit mit Polystyrol abgemischt (siehe Beispiel 1), andererseits erfindungsgemäß zum Beschichten von Polystyrol-Platten verwendet (siehe Beispiel 4).

Beispiel 4

Beschichtung von Polystyrol

Eine 3 mm dicke Polystyrolplatte (hergestellt aus Polystyrol 168N der BASF) wird mit einer Lösung von 15 g Polymer gemäß Beispiel 3 und 0,75 g 2-Hydroxy-4-methoxybenzophenon in einer Mischung aus 17 g Butanon-2 und 68 g Diacetonalkohol beschichtet. Es resultiert eine glasklare Platte mit einer ca 10 um dicken Schutzschicht des Polymeren gemäß Beispiel 3 auf Polystyrol als Substrat. Die Haftung der Schicht auf dem Substrat ist hervorragend (GTO nach DIN 53 151).

Beispiel 5

Herstellung eines Copolymeren.

Eine Mischung aus 100 g 2,2-Dimethyl-1,3-dioxolan-4-ylmethylmethacrylat und 100 g Methylmethacrylat wird mit 0,2 g t-Butylperneodecanoat und 0,6 g Dodecylmercaptan versetzt und unter Inertgas 4 Stunden bei 50 Grad C polymerisiert. Danach wird mit Aceton verdünnt, in Methanol gefällt und in Vaccum getrocknet. J = 74 ml/g

Beispiel 6

Beschichtung von Polystyrol

In Analogie zu Beispiel 4 wird eine 3 mm dicke Polystyrolplatte (hergestellt aus Polystyrol 168N der BASF) unter den in Beispiel 4 genannten Bedingungen beschichtet.
Ergebnis: glasklare Kunststoffplatte mit einer im Vergleich zum Ausgangsmaterial deutlich verbesserten Optik. Die Haftung der Beschichtung auf dem Substrat ist hervorragend (GTS nach DIN 53 151).

## Patentansprüche

**1.** Verträgliche Polymermischungen PM aus zwei unter sich verschiedenen Polymerkomponenten, dadurch gekennzeichnet, daß die Polymermischung PM besteht aus

A) 0,1 bis 99,9 Gew.-% eines Polymeren P1, das zu wenigstens 20 und bis zu 100 Gew.-% aus Styrol und

B) 99,9 bis 0,1 Gew.-% eines Polymeren P2, das zu mindestens 20 und bis zu 100 Gew.-% aus den Monomeren der Formel I

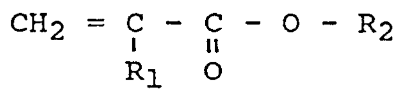 I

worin $R_1$ für Wasserstoff, Methyl oder eine Gruppe

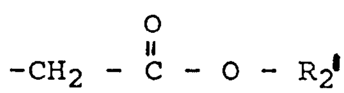

steht, und worin $R_2$ und $R_2$'für eine Gruppe

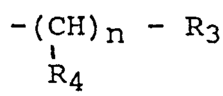

stehen, mit der Maßgabe, daß n für 0,1,2,3 und $R_3$ für einen gegebenenfalls substituierten Heterocyclus mit 5 - 8 Ringatomen und wenigstens 2 Heteroatomen im Ring, von denen wenigstens 1 Heteroatom Sauerstoff ist und $R_4$ für Wasserstoff oder einen Alkylrest mit 1 - 6 Kohlenstoffatomen steht.

**2.** Verträgliche Polymermischungen PM aus zwei Polymerkomponenten gemäß Anspruch 1, dadurch gekennzeichnet, daß die Polymerkomponente P1 zu wenigstens 50 Gew.-% aus Styrol aufgebaut ist.

**3.** Verträgliche Polymermischung PM aus zwei Polymerkomponenten gemäß den Ansprüchen 1 und 2, dadurch gekennzeichnet, daß die Polymerkomponente P1 zu wenigstens 90 Gew.-% aus Styrol aufgebaut ist.

**4.** Verträgliche Polymermischungen PM aus zwei Polymerkomponenten gemäß den Ansprüchen 1 - 3, dadurch gekennzeichnet, daß die Polymerkomponente P1 zu wenigstens 99 Gew.-% aus Styrol aufgebaut ist.

**5.** Verträgliche Polymermischungen PM aus zwei Polymerkomponenten gemäß den Ansprüchen 1 - 4, dadurch gekennzeichnet, daß die Polymerkomponente P2 zu 20 - 100 Gew.-% aus Monomeren der Formel I'aufgebaut ist.

I' 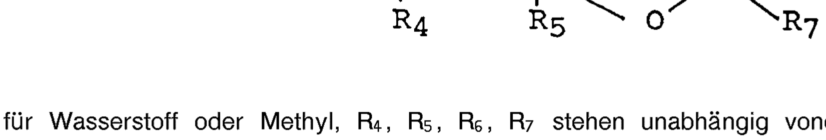

Darin steht $R_1$ für Wasserstoff oder Methyl, $R_4$, $R_5$, $R_6$, $R_7$ stehen unabhängig voneinander für Wasserstoff oder einen Alkylrest mit 1 - 6 Kohlenstoffatomen, n steht für eine ganze Zahl von 0 - 3.

6. Verträgliche Polymermischungen PM aus zwei Polymerkomponenten gemäß den Ansprüchen 1 - 4, dadurch gekennzeichnet, daß die Polymerkomponente P2 zu 20 - 100 Gew.-% aus den Monomeren der Formel I'' aufgebaut ist.

I''
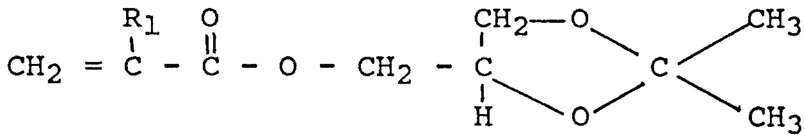

7. Verträgliche Polymermischung PM aus zwei Polymerkomponenten gemäß den Ansprüchen 1 - 6, dadurch gekennzeichnet, daß die Polymerkomponente P2 zu 100 - 30 Gew.-% aus den Monomeren der Formel I, I'oder I'' aufgebaut ist.

8. Verträgliche Polymermischung PM gemäß den Ansprüchen 1 - 7, dadurch gekennzeichnet, daß der Gehalt an polaren Monomeren ausgewählt aus der Gruppe (Meth)acrylnitril, Maleinsäureanhydrid, Maleinsäureimide, p-(2-Hydroxyhexafluoroisopropyl)styrol an der Polymerkomponente P1 < 5 Gew.-% ausmacht.

9. Verträgliche Polymermischung PM gemäß den Ansprüchen 1 - 8, dadurch gekennzeichnet, daß die Mischung aus 10 - 99 Gew.-% Polymer P1 und 90 - 1 Gew.-% Polymer P2 aufgebaut ist.

10. Verträgliche Polymermischung PM gemäß den Ansprüchen 1 - 9, dadurch gekennzeichnet, daß die Mischung aus 50 - 90 Gew.-% Polymer P1 und 50 - 10 Gew.-% Polymer P2 aufgebaut ist.

11. Verträgliche Polymermischung PM gemäß den Ansprüchen 1 - 10, dadurch gekennzeichnet, daß die Mischung aus 20 - 80 Gew.-% Polymer P1 und 80 - 20 Gew.-% Polymer P2 aufgebaut ist.

12. Verträgliche Polymermischung PM gemäß den Ansprüchen 1 - 11, dadurch gekennzeichnet, daß wenigstens eines der Polymeren P1 und P2 eine Glastemperatur Tg > 70 Grad C aufweist.

13. Verträgliche Polymermischung PM gemäß den Ansprüchen 1 - 12, dadurch gekennzeichnet, daß die Polymermischung PM eine Glastemperatur Tg > 70 Grad C aufweist.

14. Verträgliche Polymermischung PM gemäß den Ansprüchen 1 - 12, dadurch gekennzeichnet, daß die Polymerkomponente P2 eine Glastemperatur Tg < 40 Grad C aufweist.

15. Verträgliche Polymermischung PM gemäß Anspruch 14, dadurch gekennzeichnet, daß die Polymerkomponente P2 eine Glastemperatur < 20 Grad C aufweist.

16. Verträgliche Polymermischung PM gemäß den Ansprüchen 1 - 15, dadurch gekennzeichnet, daß die Polymermischung PM beim Erwärmen einen Trübungspunkt zeigt.

17. Verträgliche Polymermischung PM gemäß den Ansprüchen 1 - 16, dadurch gekennzeichnet, daß die Polymermischung einen Trübungspunkt > 25 Grad C aufweist.

18. Verträgliche Polymermischung PM gemäß Anspruch 17, dadurch gekennzeichnet, daß die Polymermischung einen Trübungspunkt > 60 Grad C aufweist.

19. Verträgliche Polymermischung PM gemäß Anspruch 18, dadurch gekennzeichnet, daß die Polymermischung einen Trübungspunkt > 180 Grad C aufweist.

20. Verträgliche Polymermischung PM gemäß den Ansprüchen 1 - 19, dadurch gekennzeichnet, daß das Molekulargewicht MW des Polymeren P1 und des Polymeren P2 > 3 000 beträgt.

**21.** Verträgliche Polymermischung PM gemäß den Ansprüchen 1 - 20, dadurch gekennzeichnet, daß die Lichtdurchlässigkeit (gemessen an einer 3 mm dicken Probe) > 88 % beträgt.

**22.** Verträgliche Polymermischung PM gemäß den Ansprüchen 1 - 21, dadurch gekennzeichnet, daß der Haze < 10 % beträgt.

**23.** Polymerkomposition aus 40 - 99 Gew.-% der Polymermischung PM gemäß den Ansprüchen 1 - 22 und 60 - 1 Gew.-% eines weiteren von P1 und P2 chemisch unterscheidbaren Polymeren P3, das mit P1, P2 und PM unverträglich ist.

**24.** Polymerkomposistion gemäß Anspruch 23, dadurch gekennzeichnet, daß der Brechungsindex der Polymermischung PM ($n_{DPM}$) bei Raumtemperatur mit dem Brechungsindex des Polymeren P3 ($n_{DP3}$) übereinstimmt, so daß gilt: $n_D^{25}{}_{PM} - n_D^{25}{}_{P3} < 0{,}01$.

**25.** Polymerkomposition gemäß den Ansprüchen 23 und 24, dadurch gekennzeichnet, daß die Glastemperatur Tg der Polymeren P3 < 20 Grad C liegt.

**26.** Polymerkomposition gemäß den Ansprüchen 23 - 25, dadurch gekennzeichnet, daß das Polymere P3 wenigstens teilweise mit den Polymeren P1 und/oder P2 kovalent verknüpft ist.

**27.** Polymerkompositionen gemäß den Ansprüchen 23 - 26, dadurch gekennzeichnet, daß das Polymere P3 vernetzt ist.

**28.** Polymerkompositionen gemäß den Ansprüchen 23 - 27, dadurch gekennzeichnet, daß das Polymere P3 Polybutadien oder Polyisopren ist.

**29.** Verwendung der Polymerkompositionen gemäß den Ansprüchen 1 - 28 zur Herstellung von Formgegenständen.

**30.** Verwendung der Polymerkompositionen gemäß Anspruch 29 zur Herstellung von spritzgegossenen Formkörpern.

**31.** Verwendung der Polymerkompositionen gemäß Anspruch 29 zur Herstellung von extrudierten Formkörpern.

**32.** Verwendung der Polymerkompositionen gemäß den Ansprüchen 29 - 31 zur Herstellung von Datenspeicherplatten für optisch ablesbare Information.

**33.** Verwendung von Polymerkompositionen gemäß den Ansprüchen 16 - 19 zur Herstellung thermotroper Schutzverglasungen

**34.** Verfahren zur Herstellung der Polymerkompositionen gemäß Anspruch 1, dadurch gekennzeichnet, daß man Polymerdispersionen enthaltend Polymerkomponente P1 und Polymerdispersionen enthalten Polymerkomponente P2 abmischt.

**35.** Polymerkompositionen, hergestellt nach dem Verfahren gemäß Anspruch 34 in Form von Filmen.

## Claims

**1.** Compatible polymer mixtures PM of two different polymer components, characterised in that the polymer mixture PM comprises

A) 0.1 to 99.9 wt.% of a polymer P1, which contains at least 20 and up to 100 wt.% of styrene, and

B) 99.9 to 0.1 wt.% of a polymer P2, which contains at least 20 and up to 100 wt.% of monomers of Formula I

$$CH_2 = \underset{R_1}{\underset{|}{C}} - \underset{O}{\underset{\|}{C}} - O - R_2 \qquad I$$

wherein $R_1$ denotes hydrogen, methyl or a group

$$-CH_2 - \overset{O}{\overset{\|}{C}} - O - R_2',$$

and wherein $R_2$ and $R_2'$ denote a group

$$-\underset{R_4}{\underset{|}{(CH)_n}} - R_3,$$

with the proviso that n is 0,1,2,3 and $R_3$ is an optionally substituted heterocycle having 5 - 8 atoms in the ring, at least 2 of which are heteroatoms and of which at least 1 heteroatom is oxygen, and $R_4$ is hydrogen or an alkyl group having 1 - 6 carbon atoms.

**2.** Compatible polymer mixtures PM consisting of 2 polymer components as claimed in Claim 1, characterised in that the polymer component P1 is synthesised in an amount of at least 50 wt.% from styrene.

**3.** Compatible polymer mixture PM consisting of two polymer components as claimed in Claims 1 and 2, characterised in that the polymer component P1 is synthesised in an amount of at least 90 wt.% from styrene.

**4.** Compatible polymer mixtures PM consisting of two polymer components as claimed in Claims 1 - 3, characterised in that the polymer component P1 is synthesised in an amount of at least 99 wt.% from styrene.

**5.** Compatible polymer mixtures PM consisting of two polymer components as claimed in Claims 1 - 4, characterised in that the polymer component P2 is synthesised, in an amount of 20 to 100 wt.%, from monomers of Formula I'.

I'

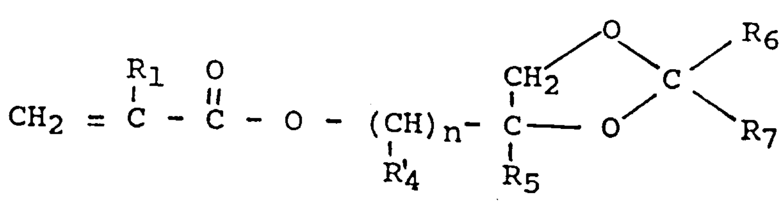

wherein $R_1$ is hydrogen or methyl, $R_4$, $R_5$, $R_6$, $R_7$ are independently of one another hydrogen or an alkyl group having 1 - 6 carbon atoms, and n is an integer of 0 - 3.

**6.** Compatible polymer mixtures PM consisting of two polymer components as claimed in Claims 1 - 4, characterised in that the polymer component P2 is synthesised, in an amount of 20 to 100 wt.%, from monomers of Formula I"

I"

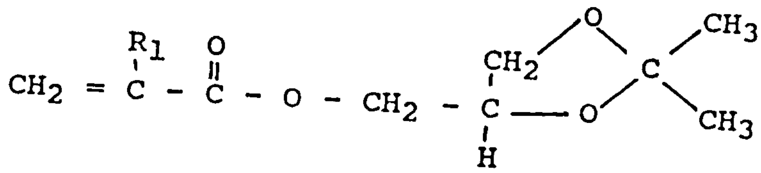

$R_1$ = H, $CH_3$

7. Compatible polymer mixture PM consisting of two polymer components as claimed in Claims 1 - 6, characterised in that the polymer component P2 is synthesised, in an amount of 100 to 30 wt.%, from monomers of Formula I, I' or I".

8. Compatible polymer mixture PM as claimed in Claims 1 - 7, characterised in that the amount of polar monomers selected from the group (meth)acrylonitrile, maleic acid anhydride, maleic acid imide, p-(2-hydroxyhexafluoroisopropyl)styrene contained in the polymer component P1 is < 5 wt.%.

9. Compatible polymer mixture PM as claimed in Claims 1 - 8, characterised in that the mixture is synthesised from 10 to 99 wt.% of polymer P1 and 90 to 1 wt.% of polymer P2.

10. Compatible polymer mixture PM as claimed in Claims 1 - 9, characterised in that the mixture is synthesised from 50 to 90 wt.% of polymer P1 and 50 to 10 wt.% of polymer P2.

11. Compatible polymer mixture PM as claimed in Claims 1 - 10, characterised in that the mixture is synthesised from 20 to 80 wt.% of polymer P1 and 80 to 20 wt.% of polymer P2.

12. Compatible polymer mixture PM as claimed in Claims 1 - 11, characterised in that at least one of the polymers P1 and P2 has a glass transition temperature Tg > 70 °C.

13. Compatible polymer mixture PM as claimed in Claims 1 - 12, characterised in that the polymer mixture PM has a glass transition temperature Tg > 70 °C.

14. Compatible polymer mixture PM as claimed in Claims 1 - 12, characterised in that the polymer component P2 has a glass transition temperature Tg < 40 °C.

15. Compatible polymer mixture PM as claimed in Claim 14, characterised in that the polymer component P2 has a glass transition temperature of < 20 °C.

16. Compatible polymer mixture PM as claimed in Claims 1 - 15, characterised in that the polymer mixture PM exhibits a cloud point upon heating.

17. Compatible polymer mixture PM as claimed in Claims 1 to 16, characterised in that the polymer mixture has a cloud point > 25 °C.

18. Compatible polymer mixture PM as claimed in Claim 17, characterised in that the polymer mixture has a cloud point > 60 °C.

19. Compatible polymer mixture PM as claimed in Claim 18, characterised in that the polymer mixture has a cloud point > 180 °C.

20. Compatible polymer mixture PM as claimed in Claims 1 - 19, characterised in that the molecular weight Mw of polymer P1 and of polymer P2 is > 3,000.

21. Compatible polymer mixture PM as claimed in Claims 1 - 20, characterised in that the light transmission (measured on a sample of 3 mm thickness) is > 88%.

22. Compatible polymer mixture PM as claimed in Claims 1 - 21, characterised in that the haze is < 10%.

**23.** Polymer composition comprising 40 - 99 wt.% of the polymer mixture PM, as claimed in Claims 1 - 22, and 60 - 1 wt.% of a further polymer P3 which is different from P1 and P2 chemically and is incompatible with P1, P2 and PM.

**24.** Polymer composition as claimed in Claim 23, characterised in that at ambient temperature the refractive index of the polymer mixture PM ($n_{DPM}$) is in conformity with the refractive index of polymer P3 ($n_{DP3}$) which means that $n_D{}^{25}{}_{PM}$ - $n_D{}^{25}{}_{P3}$ < 0.01.

**25.** Polymer composition as claimed in Claims 23 and 24, characterised in that the glass transition temperature Tg of polymer P3 < 20 °C.

**26.** Polymer composition as claimed in Claims 23 - 25, characterised in that the polymer P3 is, at least in part, covalently bonded with the polymers P1 and/or P2.

**27.** Polymer compositions as claimed in Claims 23 - 26, characterised in that the polymer P3 is cross-linked.

**28.** Polymer compositions as claimed in Claims 23 - 27, characterised in that the polymer P3 is polybutadiene or polyisoprene.

**29.** Use of the polymer compositions as claimed in Claims 1 - 28 for manufacturing moulded articles.

**30.** Use of the polymer compositions according to Claim 29 for manufacturing injection-moulded articles.

**31.** Use of the polymer compositions according to Claim 29 for manufacturing extrusion-moulded articles.

**32.** Use of polymer compositions as claimed in Claims 29 - 31 for manufacturing data storage plates for optically readable information.

**33.** Use of polymer compositions as claimed in Claims 16 - 19 for manufacturing thermotropic protective glazing.

**34.** Process for preparing polymer compositions as claimed in Claim 1, characterised in that polymer dispersions containing the polymer component P1 and polymer dispersions containing the polymer component P2 are mixed.

**35.** Polymer compositions produced in the form of films according to the process as claimed in Claim 34.

**Revendications**

**1.** Mélanges de polymères compatibles PM, formés de deux composants polymères différents l'un de l'autre, caractérisés en ce qu'ils se composent de

A) 0,1 à 99,9% en poids d'un polymère P1 qui est constitué, pour au moins 20% et jusqu'à 100% en poids, par du styrène et

B) 99,9 à 0,1% en poids d'un polymère P2 qui est constitué, pour au moins 20% et jusqu'à 100% en poids, par des monomères de formule I

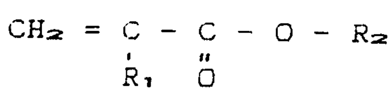

I

dans laquelle $R_1$ est mis pour un atome d'hydrogène, un reste méthyle ou un groupement

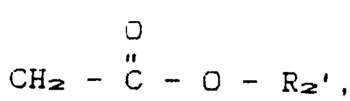

$R_2$ et $R_2$' étant mis chacun pour un groupement

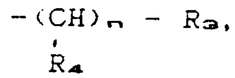

étant spécifié que n est mis pour 0, 1, 2 ou 3 et que $R_4$ est mis pour un hétérocycle éventuellement substitué à 5-8 atomes nucléaires et au moins 2 hetéroatomes dans le noyau, parmi lesquels 1 héteroatome au moins est un atome d'oxygène, et $R_4$ est mis pour un atome d'hydrogène ou pour un reste alkyle a 1-6 atomes de carbone.

**2.** Mélanges de polymères compatibles PM formés de deux composants polymères selon la revendication 1, caractérisés en ce que le composant polymère P1 est composé de styrène pour au moins 50% en poids.

**3.** Mélange de polymères compatibles PM formé de deux composants polymères selon la revendication 1 ou 2, caractérisé en ce que le composant polymère P1 est composé de styrène pour au moins 90% en poids.

**4.** Mélanges de polymères compatibles PM formés de deux composants polymères selon l'une quelconque des revendications 1 à 3, caractérisé en ce que le composant polymère P1 est composé de styrène pour au moins 99% en poids.

**5.** Mélanges de polymères compatibles PM formés de deux composants polymères selon l'une quelconque des revendications 1 à 4, caractérisés en ce que le composant polymère P2 est composé, pour 20 à 100% en poids, de monomères de formule I'

I' 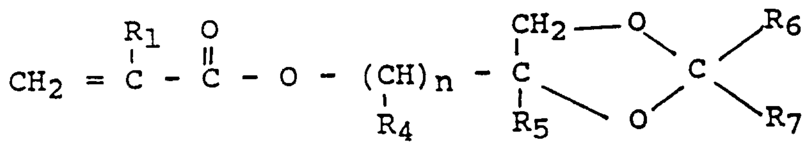

dans laquelle $R_1$ est mis pour un atome d'hydrogène ou un reste méthyle, $R_4$, $R_5$, $R_6$ et $R_7$ sont mis chacun, indépendamment les uns des autres, pour un atome d'hydrogène ou pour un reste alkyle à 1-6 atomes de carbone, et n est mis pour un nombre entier de 0 à 3.

**6.** Mélanges de polymères compatibles PM formés de deux composants polymères selon l'une quelconque des revendications 1 à 4, caractérisés en ce que le composant polymère P2 est composé, pour 20 à 100% en poids, de monomères de formule I''

I'' 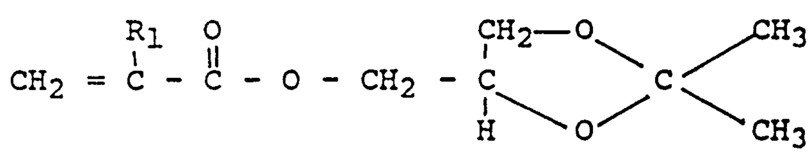

**7.** Mélange de polymères compatibles PM formé de deux composants polymères selon l'une quelconque des revendications 1 à 6, caractérisé en ce que le composant polymère P2 est composé, pour 100 à 30% en poids, des monomères de formule I, I' ou I''.

**8.** Mélange de polymères compatibles PM selon l'une quelconque des revendications 1 à 7, caractérisé en ce que la teneur du composent polymère P1 en monomères polaires choisis dans le groupe du (méth)acrylonitrile, de l'anhydride maléique, du maléimide et du p-(2-hydroxyhexafluoroisopropyl)-styrène est inférieure à 5% en poids.

9. Mélange de polymères compatibles PM selon l'une quelconque des revendications 1 à 8, caractérisé en ce que le mélange est composé de 10 à 99% en poids de polymère P1 et de 90 à 1% en poids de polymère P2.

10. Mélange de polymères compatibles PM selon l'une quelconque des revendications 1 à 9, caractérisé en ce que le mélange est composé de 50 à 90% en poids de polymère P1 et de 50 à 10% en poids de polymère P2.

11. Mélange de polymères compatibles PM selon l'une quelconque des revendications 1 à 10, caractérisé en ce que le mélange est composé de 20 à 80% en poids de polymère P1 et de 80 à 20% en poids de polymère P2.

12. Mélange de polymères compatibles PM selon l'une quelconque des revendications 1 à 11, caractérisé en ce que l'un au moins des polymères P1 et P2 a une température de transition vitreuse Tg supérieure à 70 °C.

13. Mélange de polymères compatibles PM selon l'une quelconque des revendications 1 à 12, caractérisé en ce que le mélange de polymères PM a une température de transition vitreuse Tg supérieure à 70 °C.

14. Mélange de polymères compatibles PM selon l'une quelconque des revendications 1 à 12, caractérisé en ce que le composent polymère P2 a une température de transition vitreuse Tg inférieure à 40 °C.

15. Mélange de polymères compatibles PM selon la revendication 14, caractérisé en ce que le composant polymère P2 a une température de transition vitreuse Tg inférieure à 20 °C.

16. Mélange de polymères compatibles PM selon l'une quelconque des revendications 1 à 15, caractérisé en ce que le mélange de polymères PM présente un point de trouble au chauffage.

17. Mélange de polymères compatibles PM selon l'une quelconque des revendications 1 à 16, caractérisé en ce que le mélange de polymères présente un point de trouble supérieur à 25 °C.

18. Mélange de polymères compatibles PM selon la revendication 17, caractérisé en ce que le mélange de polymères présente un point de trouble supérieur à 60 °C.

19. Mélange de polymères compatibles PM selon la revendication 18, caractérisé en ce que le mélange de polymères présente un point de trouble supérieur à 180 °C.

20. Mélange de polymères compatibles PM selon l'une quelconque des revendications 1 à 19, caractérisé en ce que les poids moléculaires MV du polymère P1 et du polymère P2 sont supérieurs à 3000.

21. Mélange de polymères compatibles PM selon l'une quelconque des revendications 1 à 20, caractérise en ce la transparence (mesurée sur une éprouvette de 3 mm d'épaisseur) est supérieure à 88%.

22. Mélange de polymères compatibles PM selon l'une quelconque des revendications 1 à 21, caractérisé en ce le degré de voile est inférieur à 10%.

23. Composition polymère, composée de 40 à 99% en poids du mélange de polymères PM selon l'une quelconque des revendications 1 à 22 et de 60 à 1% en poids d'un autre polymère P3 qui est différent chimiquement de P1 et de P2 et qui est incompatible avec P1, P2 et PM.

24. Composition polymère selon la revendication 23, caractérisée en ce que l'indice de réfraction du mélange de polymères PM ($n_{DPM}$) à la température ambiante correspond à l'indice de réfraction du polymère P3 ($n_{DP3}$), c'est-à-dire qu'on a: $n_D^{25}{}_{PM} - n_D^{25}{}_{P3} < 0{,}01$.

25. Composition polymère selon la revendication 23 ou 24, caractérisée en ce que la température de transition vitreuse Tg du polymère P3 est inférieure à 20 °C.

**26.** Composition polymère selon l'une quelconque des revendications 23 à 25, caractérisée en ce que le polymère P3 est enchaîné au moins partiellement par une liaison covalente aux polymères P1 et/ou P2.

**27.** Composition polymère selon l'une quelconque des revendications 23 à 26, caractérisée en ce que le polymère P3 est reticulé.

**28.** Composition polymère selon l'une quelconque des revendications 23 à 27, caractérisée en ce que le polymère P3 est un polybutadiène ou un polyisoprène.

**29.** Utilisation des compositions polymères selon l'une quelconque des revendications 1 à 28 pour la fabrication d'objets moulés.

**30.** Utilisation des compositions polymères selon la revendication 29 pour la fabrication de corps moulés par injection.

**31.** Utilisation des compositions polymères selon la revendication 29 pour la fabrication de corps façonnés par extrusion.

**32.** Utilisation des compositions polymères selon l'une quelconque des revendications 29 à 31 pour la fabrication de disques d'enregistrement de données pour des informations lisibles par voie optique.

**33.** Utilisation des compositions polymères selon l'une quelconque des revendications 16 à 19 pour la fabrication de vitrages de sécurité thermotropes.

**34.** Procédé de préparation des compositions polymères selon la revendication 1, caractérisé en ce que l'on mélange des dispersions de polymère contenant le composant polymère P1 et des dispersions de polymère contenant le composant polymère P2.

**35.** Compositions polymères, préparées par le procédé selon la revendication 34, sous forme de films.